# EUROPÄISCHE PATENTSCHRIFT

(11) **EP 1 602 839 B1**
(45) Veröffentlichungstag und Bekanntmachung des Hinweises auf die Patenterteilung: **30.05.2007**
(21) Anmeldenummer: 04013087.4
(22) Anmeldetag: 03.06.2004
(51) Int. Cl.: F16B 13/00, F16B 13/08

(54) **Dübel zum Einsetzen in ein Bohrloch**
Peg for inserting into a borehole
Cheville pour insérer dans trou percé

(43) Veröffentlichungstag der Anmeldung: 07.12.2005
(73) Patentinhaber: A & M Electric Tools GmbH, 71364 Winnenden (DE); fischerwerke Artur Fischer GmbH & Co. KG, 72178 Waldachtal (DE)
(72) Erfinder: Dipl.-Ing. Fohr, Diethard, 71364 Winnenden (DE)
(74) Vertreter: Suchy, Ulrich Johannes

(56) Entgegenhaltungen:
- DE-A- 2 054 836
- NL-A- 7 411 017
- US-A- 3 049 358
- US-A- 3 184 353
- US-A- 3 683 470
- US-A- 5 415 714

## Beschreibung

Die Erfindung betrifft einen Dübel zum Einsetzen in ein Bohrloch sowie die Verwendung eines Dübels (US 3 049 358).

Es ist eine Vielzahl von Spreiz-, Klapp- oder Kippdübeln bekannt, die ihn Bohrungen beispielsweise eines Steinwerkstoffes eingesetzt werden. Zur Herstellung entsprechender Bohrungen sind handgeführte Elektrowerkzeuge vorgesehen. Ein Bohrwerkzeug ist dabei an einer drehend antreibbaren Spindel eingespannt. Zum Ausführen einer Bohrung wird das Bohrwerkzeug in Drehung versetzt und gegen das zu bohrende Material geführt. Ein Bohrkopf des Bohrwerkzeuges ist mit Schneiden versehen, die in einer drehenden Schneidbewegung das Material abtragen. Die drehende Kreisbahnbewegung der Schneiden bewirkt eine zylindrische Ausgestaltung der Bohrung mit kreisförmigem Querschnitt.

In das zylindrische Bohrloch eines Betonbauteiles oder dgl. kann der Dübel eingesetzt werden, der zur Aufnahme einer Schraube, einer Gewindestange oder dgl. vorgesehen ist. Mittels des Gewindes der Schraube bzw. der Gewindestange kann ein weiteres Teil am Betonbauteil befestigt werden, wobei ein Festziehen des Gewindes zu einem klemmenden Aufspreizen des Dübels und damit zu einer unverrückbaren Festlegung der Schraube am Betonbauteil führt. Die Klemmwirkung des Dübels ist abhängig von der maßgenauen Abstimmung des Bohrungsdurchmessers zum Durchmesser des Dübels. Schlag- bzw. Hammerwerksvibrationen der Bohrmaschine können zu einem Verlaufen des Bohrwerkzeuges beim Bohren führen. Es entsteht eine unrunde bzw. in ihrem Durchmesser vom Sollmaß abweichende Bohrung, in der ein eingesetzter Dübel seine volle Haltekraft nicht entfalten kann.

Bei einer großen Anzahl von mit dem gleichen Bohrwerkzeug ausgeführten Bohrungen tritt ein Verschleiß am Bohrkopf auf, der zu einem Untermaß des Bohrungsdurchmessers führen kann. Entsprechende Dübel können ggf. nicht in die zu kleine Bohrung eingesetzt werden.

Für bestimmte Anwendungsfälle kann es erwünscht sein, Bohrungen mit einer von der Zylinderform abweichenden Form auszuführen. Zur Befestigung von Dübeln in Bohrungen kann eine Hinterschneidung in der Bohrung erwünscht sein, die neben einer klemmenden Festlegung auch eine formschlüssige Festlegung des Dübels bewirkt, wodurch dessen Haltekraft gesteigert werden soll.

Zum Ausführen derartiger Bohrungen beispielsweise in Beton, Mauerwerk oder dgl. wird mittels eines Bohrhammers ein zylindrisches Loch vorgebohrt. Ein Schlagwerk des Hammerbohrers wirkt mit dem Bohrwerkzeug derart zusammen, daß axiale Schläge mittels des Bohrwerkzeuges auf den Schneidenbereich übertragen werden. Die entstehende Meißelwirkung führt in Verbindung mit der Drehbewegung des Bohrwerkzeuges zu einem Abtrag des zu bohrenden Materials.

Nachdem die gewünschte Bohrtiefe erreicht ist, wird mit der Bohrmaschine eine kreisförmig schwenkende Bewegung ausgeführt, in dessen Folge das Bohrloch im Bereich des Bohrkopfes aufgeweitet wird. Es entsteht eine sich in Bohrrichtung kegelförmig aufweitende Bohrungsform, deren Aufweitung eine im Querschnitt kreisförmige Hinterschneidung zur formschlüssigen Festlegung des Dübels bildet.

Die erzielbaren Hinterschneidungen sind in ihrer Form nur unpräzise ausführbar und hängen in ihrer Ausprägung stark vom Bediener ab. Das Bohrwerkzeug ist dabei hohen dynamischen Biegebelastungen ausgesetzt, die zu erhöhtem Verschleiß oder sogar zu einem Werkzeugbruch führen können. Der Betrieb des Schlag- bzw. Hammerwerkes bewirkt eine unangenehm hohe Geräusch- und Vibrationsbelastung der Umgebung und insbesondere der Bedienperson. Das Antriebsdrehmoment des Bohrers erfordert ein entsprechend hohes Haltemoment durch die Bedienperson. Der drehende Bohrer kann blockieren, was die Ausführung präziser Bohrungen erschwert. Die Form der herstellbaren Bohrungen ist auf eine Zylinder- oder Kegelform mit kreisförmigem Querschnitt beschränkt.

Der Erfindung liegt die Aufgabe zugrunde, die Haltewirkung eines Dübels in einem Bohrloch zuverlässiger zu gestalten.

Die Aufgabe wird durch einen Dübel mit den Merkmalen des Anspruchs 1 gelöst.

Die Erregerfrequenz und die Eigenschwingungsfrequenz liegen zweckmäßig oberhalb von 10 KHz und insbesondere im Ultraschallbereich. Im Betrieb des Elektrowerkzeuges sind der Schwingungserreger und das Bohrwerkzeug zumindest näherungsweise in Resonanz. Das zu entfernende bzw. abzutragende Material wird in dieser Resonanzfrequenz schlagend und ggf. unterstützend auch schneidend abgetragen. Das in seiner Eigenschwingungsfrequenz schwingende Bohrwerkzeug führt Schwingungen mit niedriger Amplitude und hoher Wirksamkeit aus, wobei zur Erregung dieser Schwingungen infolge der Resonanzwirkung nur sehr geringe Erregeramplituden von beispielsweise 20µm erforderlich sind. Die hochfrequente Erregung mit geringer Amplitude führt zu einer geringen mechanischen und akustischen Belastung der Umgebung. Das Elektrowerkzeug kann von Hand ruhig geführt werden. Bohrungen mit unterschiedlicher Kontur können feinfühlig und präzise ausgearbeitet werden.

Das Bohrwerkzeug ist dabei als der einzusetzende Bohrdübel ausgebildet, der zum Verbleib in dem mit dem Bohrwerkzeug bzw. mit dem Bohrdübel hergestellten Bohrloch vorgesehen ist. Der mittels des Elektrowerkzeuges zu Resonanzschwingungen angeregte Bohrdübel trägt das Material exakt in seiner eigenen Umfangskontur ab. Es entsteht eine eng den Bohrdübel umschließende Bohrung, in der der Bohrdübel hohe Klemmkräfte entwickeln kann. Dies gilt auch für Waben- oder Hohlblockziegel, Bimsstein oder dgl., bei welchen in konventioneller Bohrtechnik durch Ausbrüche zu große Bohrungen entstehen. Nach Ausführung der Bohrung kann der Bohrdübel zunächst wieder herausgezogen werden, um das Bohrloch von Staub oder dgl. zu befreien. Vorteilhaft wird der Bohrdübel nach Erreichen der vorgesehenen Bohrtiefe von der Spannvorrichtung entkoppelt und im Bohrloch belassen. Eine Beschädigung der Bohrlochwände bei weichen Werkstoffen wie Gasbeton, Gips oder dgl. ist vermieden. Für jede Bohrung wird ein neuer Bohrdübel eingesetzt, so daß verschleißbedingte Maßtoleranzen des Bohrloches nicht auftreten können.

In einer zweckmäßigen Weiterbildung ist der Bohrdübel zur statisch festen und insbesondere drehfesten Halterung in einer Spannvorrichtung des Elektrowerkzeuges vorgesehen. Die statisch feste Einspannung des Bohrwerkzeuges bzw. des Bohrdübels bewirkt, daß dessen die Bohrung bewirkende Schwingbewegung im wesentlichen ausschließlich eine dynamische Eigenschwingung ist. Die feste Einspannung führt zu einer präzise definierten Eigenschwingfrequenz, die eine Abstimmung der Erregerfrequenz des Schwingungserregers auf das Gesamtsystem vereinfacht. Die drehfeste Einspannung des Bohrwerkzeuges bzw. des Bohrdübels erlaubt insbesondere in Verbindung mit einem unrunden Bohrkopf die Herstellung von Bohrungen mit einem von der Kreisform abweichenden Querschnitt. Nach Erreichen der gewünschten Bohrtiefe kann das Elektrowerkzeug gemeinsam mit dem drehfest eingespannten Bohrdübel gedreht werden, wobei die radial über den Schaft des Bohrdübels hervorstehenden Teile des Bohrkopfes eine in der Form präzise definierte Hinterschneidung gegenüber der unrunden Kernbohrung erzeugen.

Der Bohrdübel weist vorteilhaft eine Gewindestange auf, die zur Halterung des Bohrdübels in der Spannvorrichtung des Elektrowerkzeuges vorgesehen ist. Der Bohrdübel selbst bzw. sein Grundkörper kann dabei ungehindert ohne Einschränkung durch die Spannvorrichtung schwingen. Es ist eine hohe Bohrleistung erzielbar. Die Gewindestange mit einem ggf. daran befestigten Spreizkopf wird bei der Herstellung der Bohrung gemeinsam mit dem Bohrdübel in die Bohrung eingesetzt. Ein zusätzlicher nachträglicher Montageaufwand entfällt.

In einer zweckmäßigen Ausbildung sind die Gewindestange und ein Grundkörper des Bohrdübels an ihren gegenseitigen Berührflächen beschichtet. Die Beschichtung ist in ihren Materialeigenschaften derart gewählt, daß eine gute, möglichst verlustfreie Übertragung der Schwingungsenergie vom Schwingungserreger durch die Gewindestange auf den Grundkörper des Bohrdübels gewährleistet ist. Reibungsverluste zwischen der Gewindestange und dem Grundkörper sind ebenso wie eine Materialverbindung des Gewindes mit dem Grundkörper in Folge der hochfrequenten Schwingungsenergie vermieden.

Der Bohrdübel oder die Spannvorrichtungen weisen zweckmäßig einen Hilfszapfen auf, der zur Halterung des Bohrdübels in bzw. an der Spannvorrichtung des Elektrowerkzeuges vorgesehen ist. Der Grundkörper des Bohrdübels und der Hilfszapfen können in ihrer Kontur jeweils angepaßt an die Erfordernisse ausgeführt werden. Der Hilfszapfen kann in seiner Form auf eine möglichst verlustarme Energieübertragung im Bereich der Spannvorrichtung sowie hinsichtlich einer schnellen Auswechselbarkeit an der Spannvorrichtung optimiert werden.

In einer vorteilhaften Variante ist der Bohrdübel aus einem Magnetwerkstoff und insbesondere aus einem weichmagnetischen Eisenwerkstoff gebildet und zur magnetischen Halterung des Bohrdübels in der Spannvorrichtung des Elektrowerkzeuges vorgesehen. Die Halterung mittels Magnetkraft erleichtert das Einspannen des Bohrdübels und nach Herstellung des Bohrloches die Trennung zwischen dem Bohrdübel und der Spannvorrichtung. Je nach Ausgestaltung des Bohrdübels und des damit hergestellten Bohrloches können die Reibkräfte im Bohrloch ausreichen, den Bohrdübel derart zu halten, daß eine Trennung durch einfaches Abziehen des Elektrowerkzeuges ohne eine zusätzliche manuelle Betätigung möglich ist. Die vergleichsweise geringe Haltekraft der Magnethalterung ist ohne nachteiligen Einfluß auf das Bohrergebnis. Die Schwingungsenergie des Schwingungserregers wird zumindest näherungsweise verlustfrei über die Flächenpressung zwischen Magnethalter und Bohrdübel in Folge der zum Bohren erforderlichen, von Hand aufgebrachten Anpreßkraft übertragen.

Der Bohrdübel weist einen Saug-/Spülkanal auf, der zweckmäßig außenseitig seines Gründkörpers verlaufen kann. Insbesondere ist die Gewindestange rohrförmig zur Bildung des Saug-/Spülkanales ausgebildet. In Verbindung mit einer im Bereich des Bohrwerkzeuges vorgesehenen Absaugeinrichtung kann Bohrstaub durch den Saug-/Spülkanal abgesaugt werden, wobei das im Bereich des Bohrkopfes abgetragene Bohrmehl unter Vermeidung von Staubentwicklung direkt am Abtragungsort abgesaugt wird. Das Fehlen einer Bohrmehlabfuhr durch die nach dem Stand der Technik übliche spiralige Bohrmehlnut in Verbindung mit einer Drehbewegung des Bohrers kann durch die Absaugeinrichtung und den Saug-/Spülkanal in einfacher Weise kompensiert werden. Die gleiche Anordnung kann auch in umgekehrter Richtung durchströmt sein. Bei der Durchströmung mit Luft kann das Bohrmehl wirkungsvoll aus dem Bohrloch ausgeblasen werden. Bei einer Anordnung mit zwei Saug-/Spülkanälen kann ein geschlossener Kreislauf des Luftstromes mit gesteuerter Luftzu- und -abfuhr erzeugt werden.

In einer zweckmäßigen Ausführung ist im Bereich des Bohrwerkzeuges eine Zuführeinrichtung für eine insbesondere mit abrasiven Bohrhilfsmitteln versehene Bohrflüssigkeit vorgesehen, wobei die Bohrflüssigkeit durch den Saug-/Spülkanal zum Bohrkopf geleitet und ggf. auch abgesaugt wird. Es kann eine Bohrflüssigkeit beispielsweise in Form von Wasser mit Diamantstaub gezielt dosiert durch einen Sammler und den Saug-/Spülkanal zum Bohrkopf gepumpt werden. Bohrdübel können mit vielfältig ausgeführten Bohrköpfen auch ohne Schneide eingesetzt werden. Die abtragende Schwingbewegung des Bohrkopfes beispielsweise mit flacher Stirnfläche wird durch die abrasiven. Bohrhilfsmittel wie Diamantstaub oder dgl. wirkungsvoll unterstützt. Die Bohrflüssigkeit führt dabei das ausgebohrte Material unter Vermeidung von Staubentwicklung ab. Auch hier kann bei einer Anordnung mit zwei Saug-/Spülkanälen geschlossener Kreislauf der Bohrflüssigkeit mit gesteuerter Flüssigkeitszu- und -abfuhr erzeugt werden.

Ein Grundkörper des Bohrdübels kann zweckmäßig zumindest im wesentlichen zylindrisch ausgeführt sein. Das damit hergestellte Bohrloch ist dementsprechend ebenfalls zylindrisch. Es ergibt sich eine flächige Anlage des Bohrdübels an der zylindrischen Bohrlochwand mit entsprechend hohen möglichen Klemmkräften.

Der Grundkörper des Bohrdübels weist in einer vorteilhaften Ausbildung einen Schaft und ein als Bohrkopf ausgebildetes freies Ende auf, wobei der Bohrkopf eine unrunde, in radialer Richtung über den Schaft hinausragende Querschnittskontur aufweist. Es können in einfacher Weise prismatische Bohrungen mit unrunder Querschnittsform hergestellt werden, wobei Ecken des unrunden Bohrkopfes bei einer Drehung des im Elektrowerkzeug eingespannten Bohrwerkzeuges einfach und wirkungsvoll eine gegebenenfalls erwünschte Hinterschneidung erzeugen. Der Bohrdübel ist nach Ausführung der Drehbewegung durch Formschluß in der Hinterschneidung zusätzlich zur Klemmkraft zuverlässig gehalten.

In einer vorteilhaften Ausführung weist der Grundkörper des Bohrdübels einen beim Bohren selbsttätig aufspreizenden Bohrkopf auf. Insbesondere weist der Grundkörper des Bohrdübels dazu im Bereich seines Bohrkopfes Längsschlitze auf, wobei eine Stirnseite des Bohrkopfes konkav gewölbt ausgeführt ist. Der beim Bohren erzeugte axiale Anpreßdruck auf der Stirnseite des Bohrkopfes erzeugt über die konkave Wölbung eine radial nach außen gerichtete Aufspreizkraft, die den Grundkörper im Bereich der Längsschlitze radial nach außen aufweiten kann. Die Aufweitung erfolgt selbsttätig als Funktion des Bohrfortschrittes. Es entsteht ohne zusätzliche Maßnahmen eine kegelförmig in der Bohrrichtung sich erweiternde Bohrung, die in ihrer Form exakt an den kegelförmig in Bohrrichtung sich aufweitenden Bohrdübel angepaßt ist. Ohne zusätzliche spreizende Maßnahmen ist eine formschlüssige Befestigung des Bohrdübels im Bohrloch mit hoher Paßgenauigkeit gegeben.

Mit dem erfindungsgemäßen Bohrdübel in Verbindung mit dem vorgenannten Elektrowerkzeug können Bohrungen in Stein oder steinähnlichen Werkstoffen wie Beton oder Mauerwerk oder dgl. präzise hergestellt werden. Der in der Bohrung verbleibende Bohrdübel sitzt paßgenau in der von ihm selbst erzeugten Bohrung. Es können insbesondere unrunde Bohrungen und/oder Bohrungen mit Hinterschneidung und hoher Formgenauigkeit hergestellt werden, die zur klemmenden und formschlüssigen Festlegung entsprechender Bohrwerkzeuge in Form von Bohrdübeln geeignet sind.

Ausführungsbeispiele der Erfindung sind im folgenden anhand der Zeichnung näher beschrieben. Es zeigen:
- Fig. 1: in einer schematischen Perspektivdarstellung ein handgeführtes Elektrowerkzeug mit einem Piezoerreger und einem drehfest eingespannten Bohrwerkzeug in Form eines Bohrdübels;
- Fig. 2: eine Variante des Bohrdübels nach Fig. 1 mit einem radial hervorstehenden Bohrkopf;
- Fig. 3: in einer schematischen Draufsicht ein Bauteil mit einer dreieckig ausgeführten Bohrung mit kreisrundem Hinterschnitt;
- Fig. 4: eine schematische Schnittdarstellung des Bauteils nach Fig. 3 mit Einzelheiten zur Hinterschneidung der Bohrung und mit eingesetztem Bohrdübel nach Fig. 2;
- Fig. 5: eine Variante der Anordnung nach Fig. 1 mit einem weiteren, den Bohrdübel umgreifenden Sammler;
- Fig. 6: in einer vergrößerten Detailansicht den Bohrdübel nach Fig. 5 mit Einzelheiten seines selbsttätig aufspreizenden Bohrkopfes;
- Fig. 7: Einzelheiten der als Spannzange ausgeführten Spannvorrichtung nach Fig. 5;
- Fig. 8: eine Variante der Spannvorrichtung nach Fig. 7 in Form einer Magnethalterung;
- Fig. 9: eine weitere Variante der Spannvorrichtung mit einem zum Aufstecken des Bohrdübels vorgesehenen Hilfszapfen.

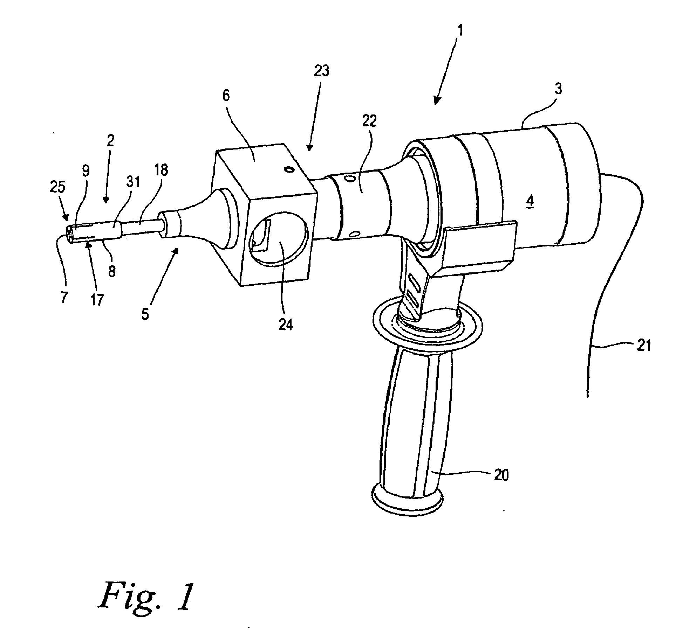

Fig. 1 zeigt in einer perspektivischen Übersichtsdarstellung ein Elektrowerkzeug 1 mit einem Schwingungserreger 3, einem sogenannten Booster 22, einem Handgriff 20 und einem Anschlußkabel 21. An einem werkzeugseitigen Ende 23 des Elektrowerkzeuges 1 ist eine Spannvorrichtung 5 vorgesehen, in der ein Bohrwerkzeug 2 statisch fest und insbesondere bezogen auf das Elektrowerkzeug 1 drehfest eingespannt ist. Der Handgriff 20 ist im gezeigten Ausführungsbeispiel am Schwingungserreger 3 schwingungsgedämpft befestigt, kann aber auch beispielsweise am Booster 22 entsprechend festgelegt sein.

Der Schwingungserreger 3 ist im gezeigten Ausführungsbeispiel als Piezoerreger 4 ausgeführt, der über das Anschlußkabel 21 von einem nicht dargestellten elektrischen Schwingungsgenerator mit elektrischer Energie versorgt ist. Es kann dafür ein Netz- oder auch ein Akkubetrieb vorgesehen sein. Die von dem Piezoerreger 4 durch elektrische Anregung erzeugten mechanischen Schwingungen werden mittels des sogenannten Boosters 22 in ihrer Amplitude verstärkt und auf das in der Spannvorrichtung 5 eingespannte Bohrwerkzeug 2 übertragen.

Die Erregerfrequenzen des Piezoerregers 4 liegen im gezeigten Ausführungsbeispiel im Ultraschallbereich bei ca. 20 kHz. Das einseitig fest eingespannte Bohrwerkzeug 2 ist in seinen Eigenschwingungsfrequenzen so ausgelegt, daß es zumindest mit einem Eigenmode in Resonanz zur Erregerfrequenz des Piezoerregers 4 steht. Die geometrische Ausbildung des Bohrwerkzeuges 2 ist dabei vorteilhaft so gewählt, daß mehrere Eigenmoden in ihrer Frequenz nahe beieinander liegen, wobei der entsprechend abgestimmte Piezoerreger 4 eine Resonanzerregung der verschiedenen Eigenmoden bewirkt. Es kommen dabei Longitudinal-, Transversal- und Torsionsschwingungen in Betracht.

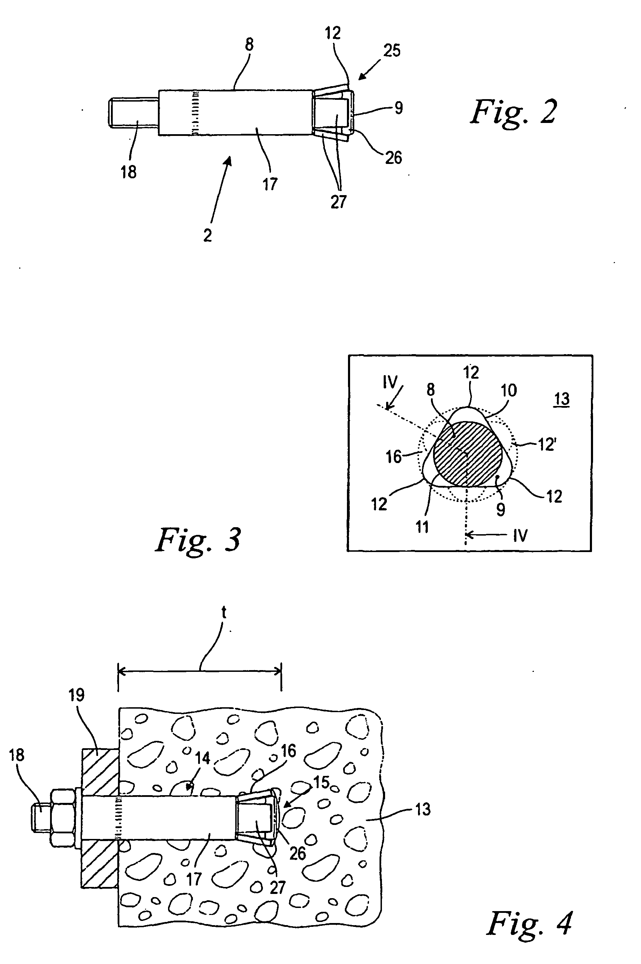

Das Bohrwerkzeug 2 ist als zylindrischer Bohrdübel 17 aus Stahl mit einem Grundkörper 31 und einer darin gehaltenen Gewindestange 18 ausgebildet. Der Bohrdübel 17 ist dabei mittels der Gewindestange an der Spannvorrichtung 5 gehalten. Die Schwingungsenergie des Schwingungserregers 3 wird von der Spannvorrichtung 5 über die Gewindestange 18 auf den Grundkörper 31 übertragen. Die Gewindestange 18 und der Grundkörper 31 sind außen und innen und damit auch an ihren gegenseitigen Berührflächen vollflächig beschichtet. Der Bohrdübel 17 ist als Spreizdübel zur klemmenden Befestigung in einem im Zusammenhang mit Fig. 4 näher beschriebenen Betonbauteil 13 vorgesehen. Es kann auch eine Ausbildung als Kipp- oder Klappdübel zur formschlüssigen Hinterschneidung einer Gipskartonplatte oder dgl. vorteilhaft sein. Ein freies Ende 25 des Bohrdübels 17 ist als Bohrkopf 9 ausgeführt, der die gleiche zylindrische Außenkontur aufweist, wie ein sich daran anschließender Schaft 8 des Bohrdübels 17.

Der an dem Schaft 8 des Bohrwerkzeuges 2 angeordnete Bohrkopf 9 kann über die entsprechenden Schwingungen bei einer auszuführenden Bohrung Material in axialer, in radialer und in Umfangsrichtung abtragen.

Im Bereich des geräteseitigen Endes vom Bohrwerkzeug 2 ist ein Sammler 6 vorgesehen, dessen Innenraum in strömungsleitender Verbindung mit einem innenseitig durch das Bohrwerkzeug 2 koaxial verlaufenden Saug-/Spülkanal 7 in Verbindung steht. Zur Bildung des Saug-/Spülkanales 7 ist die Gewindestange 18 rohrförmig ausgeführt. Der Saug-/Spülkanal 7 kann als außenseitige Nut am Bohrdübel 17 angeordnet sein. Der Sammler 6 weist eine seitliche Anschlußöffnung 24 auf, über die Bohrstaub von der stirnseitigen Mündung des Saug-/Spülkanales 7 aus dem Bereich des Bohrkopfes 9 abgesaugt werden kann. Es kann auch umgekehrt Luft durch die Anschlußöffnung 24 und den Saug-/Spülkanal 7 in die auszuführende Bohrung eingeblasen werden. Ebenso kann eine Bohrflüssigkeit beispielsweise in Form von Wasser mit einem abrasiven Bohrhilfsmittel wie Diamantstaub oder dgl. durch die Anschlußöffnung 24 und den Saug-/Spülkanal 7 in die Bohrung direkt in den Bereich des Bohrkopfes 9 eingeleitet werden.

Fig. 2 zeigt eine Variante des Bohrwerkzeuges 2 bzw. des Bohrdübels 17 nach Fig. 1. Die Gewindestange 18 durchgreift den Bohrdübel 17 in Längsrichtung und weist im Bereich des freien Endes 25 einen kegelförmigen Spreizkopf 26 auf. Eine Anzahl von schräg aufgeweiteten Spreizlaschen 27 des Bohrdübels 17 sind um den Umfang des Spreizkopfes 26 verteilt angeordnet und stehen radial mit Ecken 12 über den zylindrischen Schaft 8 hervor. Die Spreizlaschen 27 bilden zusammen mit dem Spreizkopf 26 einen unrunden Bohrkopf 9.

Fig. 3 zeigt in einer schematischen Draufsicht ein Betonbauteil 13, beispielhaft aus Gasbeton. Es kann auch ein Naturstein, Beton, Mauerwerk oder dgl. sowie auch ein Holzwerkstoff, Metall oder ein Kunststoff in Frage kommen. Der Schaft 8 des Bohrwerkzeuges 2 bzw. des Bohrdübels 17 (Fig. 2) weist eine kreisrunde Querschnittskontur 11 auf, die innenseitig an die beispielhaft dreieckige, durch die Spreizlaschen 27 (Fig. 2) gebildete Querschnittskontur 10 des Bohrkopfes 9 angrenzt. Die Querschnittskontur 10 des Bohrkopfes 9 ragt dabei im Bereich der gerundet ausgeführten Ecken 12 radial über die Querschnittskontur 11 des Schaftes 8 hinaus. Zum Ausführen des Bohrloches 14 nach Fig. 4 wird das in Resonanz schwingende Bohrwerkzeug 2 (Fig. 2) in axialer Richtung gegen das Betonbauteil 13 geführt, wobei durch die abrasive Wirkung des schwingenden Bohrkopfes 9 das Bohrloch 14 (Fig. 4) entsteht, dessen Querschnittsform der Querschnittskontur 10 des Bohrkopfes 9 entspricht. Im gezeigten Ausführungsbeispiel entsteht ein Bohrloch 14 mit gerundet dreieckigem Querschnitt.

Nach Erreichen der gewünschten Bohrtiefe wird das Elektrowerkzeug 1 mit dem drehfest eingespannten Bohrwerkzeug 2 (Fig. 2) langsam um die Längsachse des Bohrwerkzeuges 2 gedreht, bis die Ecken 12 beispielsweise die gestrichelt dargestellte und mit 12' bezeichnete Position nach Fig. 3 erreicht haben. Durch weiteres Drehen des Elektrowerkzeuges 1 erzeugen die Ecken 12 durch Abtrag des Materials aus dem Betonbauteil 13 eine etwa kreisförmige Hinterschneidung 16 gegenüber der dreieckigen Querschnittskontur 10 der Bohrung 26.

Fig. 4 zeigt eine schematische Schnittdarstellung des Betonbauteils 13 entlang der Linie IV-IV nach Fig. 3. Demnach ist im Bohrungsgrund des Bohrloches 14 die radial und konisch aufgeweitete Hinterschneidung 16 gebildet, in der der Bohrdübel 17 nach Fig. 2 formschlüssig und klemmend befestigt ist. Der Bohrdübel 17 nimmt die Gewindestange 18 auf. An der Gewindestange 18 ist ein angedeutetes Werkstück 19 gehalten, wobei durch Festziehen der Verschraubung neben dem Formschluß an der Hinterschneidung 16 auch eine Klemmwirkung durch Aufspreizen der Spreizlaschen 27 mittels des Spreizkopfes 26 eintritt.

Das Bohrloch 14 ist mit dem zu Schwingungen angeregten Bohrdübel 17 gebohrt worden. Nach dem eine gewünschte Bohrtiefe t erreicht und die bajonettartige Drehbewegung nach Fig. 3 vollzogen wurde, wurde der Bohrdübel 17 von der Spannvorrichtung 5 (Fig. 1) entkoppelt, wobei der Bohrdübel 17 in dem Bohrloch 14 verblieben ist. Eine vergleichbare Herstellung des Bohrloches 14 und Einbringung des Bohrdübels 17 ergibt sich auch für eine zylindrische Ausführung des Bohrdübels 17 nach Fig. 1, wobei lediglich keine Hinterschneidung 16 ausgebildet wird.

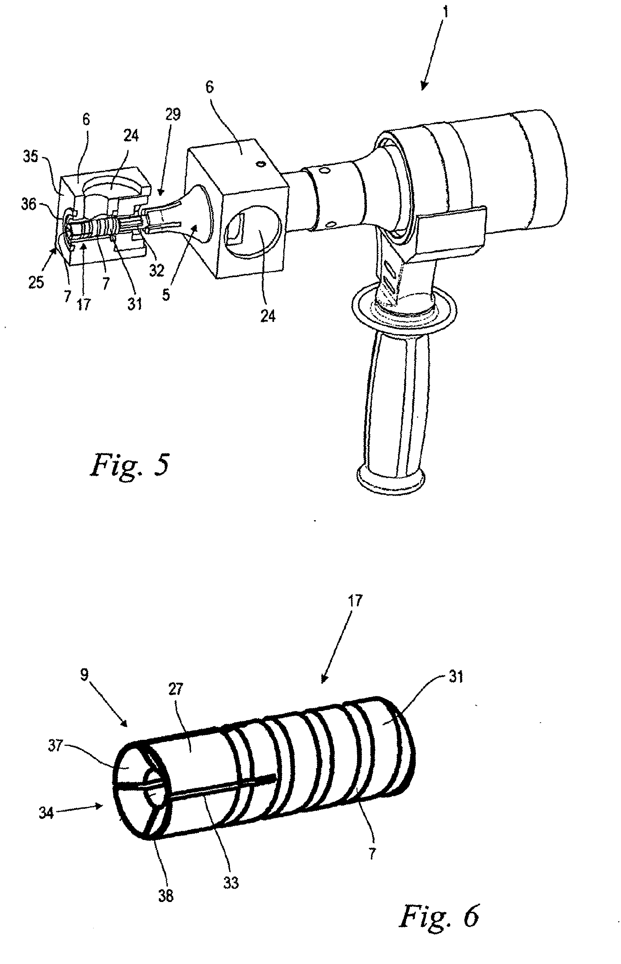

Fig. 5 zeigt eine Variante der Anordnung nach Fig. 1, bei der zusätzlich zu dem Sammler 6 im Bereich der Spannvorrichtung 5 ein weiterer, den Grundkörper 31 des Bohrdübels 17 umschließender Sammler 6 vorgesehen ist. Der Bohrdübel 17 weist einen innenseitig verlaufenden Saug-/Spülkanal 7 auf, der vom freien Ende 25 aus längs durch den Bohrdübel 17 verläuft und mit dem geräteseitigen Sammler 6 verbunden ist. Außenseitig des Grundkörpers 31 ist ein weiterer, hier wendelförmig verlaufender Saug-/Spülkanal 7 vorgesehen, der mit einer Anschlußöffnung 24 des den Grundkörper 31 umschließenden Sammlers 6 strömungsleitend verbunden ist.

Der dübelseitige Sammler 6, von dem der besseren Übersichtlichkeit halber in geschnittener Darstellung nur eine Hälfte gezeigt ist, ist an seiner in Bohrrichtung liegenden Stirnfläche 35 mit einem ringförmig den Bohrdübel 17 umschließenden Dichtring 36 versehen. Beim Ausführen einer Bohrung wird der Dichtring 36 gegen das Betonbauteil 13 (Fig. 4) gedrückt, wodurch eine geschlossene, strömungsleitende Verbindung zwischen den beiden Sammlern 6 über die beiden Saug-/Spülkanäle 7 gebildet ist. Dabei kann wahlweise von außen nach innen, also vom dübelseitigen Sammler 6 hin zum werkzeugseitigen Sammler 6 oder auch in umgekehrter Richtung Luft oder eine Bohrflüssigkeit gepumpt und/oder gesaugt werden. Im Bereich des freien Endes 25 vom Bohrdübel 17 ist ein geschlossenes, strömungsleitendes System gebildet, aus dem frei werdendes Bohrmehl oder dgl. zumindest näherungsweise vollständig abtransportiert werden kann.

Der Bohrdübel 17 weist auf seiner dem Elektrowerkzeug 1 zugewandten Seite einen Hilfszapfen 32 auf, mit dem der Bohrdübel 17 an der Spannvorrichtung 5 gehalten ist. Die Spannvorrichtung 5 ist an ihrem dübelseitigen Ende als werkzeuglos betätigbare Schnellspannvorrichtung ausgebildet, die im gezeigten Ausführungsbeispiel als Spannzange 29 ausgeführt ist. Die Spannvorrichtung 5 ist dabei aus einem Material mit geringer Schallabsorption gefertigt, wozu im gezeigten Ausführungsbeispiel Titan bzw. eine Titanlegierung als Werkstoff gewählt ist.

Fig. 6 zeigt in einer vergrößerten Detailansicht den Grundkörper 31 des Bohrdübels 17 nach Fig. 5 mit seinem außen liegenden, wendelförmig in Achsrichtung verlaufenden, als Nut ausgebildeten Saug-/Spülkanal 7. Der Grundkörper 31 ist.unverformt gezeigt und weist dabei eine im wesentlichen zylindrische Form auf, die sich über die gesamte Länge des Grundkörpers 31 einschließlich des am freien Ende 25 (Fig. 5) liegenden Bohrkopfes 9 erstreckt. Der Grundkörper 31 weist im Bereich des Bohrkopfes 9 beispielhaft vier Längsschlitze 33 auf, die parallel zur Längsachse des Grundkörpers 31 etwa über dessen halbe Länge verlaufen. Sie teilen dabei die Wand des rohrförmigen Grundkörpers 31 in vier voneinander getrennte Spreizlaschen 27 auf.

Eine Stirnseite 34 des Bohrkopfes 9 ist konkav gewölbt ausgeführt, wobei im gezeigten Ausführungsbeispiel eine konkave Kegelfläche 37 gebildet ist. Es kann auch zweckmäßig sein, die Spreizlaschen 27 mit schräg nach innen gestellten ebenen Flächen, mit einer Kugelkalottenfläche oder dgl. zu versehen. Beim Übergang der Kegelfläche 37 in die Mantelfläche des zylindrischen Grundkörpers 31 ist eine ringförmige Schneidkante 38 gebildet.

Aus dem funktionalen Zusammenspiel der Schneidkante 38 mit der Kegelfläche 37 und den Längsschlitzen 33 ergibt sich eine Ausführung des Grundkörpers 31, dessen Bohrkopf 9 sich beim Bohren selbsttätig aufspreizt. Der beim Bohren aufgebrachte Anpreßdruck auf die Kegelfläche 37 wirkt über die Schrägstellung der Kegelfläche 37 relativ zur Längsachse des Grundkörpers 31 mit einer radialen, nach außen gerichteten Kraftkomponente auf die Spreizlaschen 27. Die Spreizlaschen 27 erfahren dabei mit zunehmender Bohrtiefe eine radiale Aufweitung, wobei insbesondere die sich aufweitende Schneidkante 38 eine kegelförmige, in Bohrrichtung sich erweiternde Bohrungsform herbeiführt. Im verformten Zustand sind die Spreizlaschen 27 nach außen aufgeweitet und führen damit zu einer formschlüssigen Befestigung in der kegelförmig in Bohrungsrichtung sich erweiternden Bohrung.

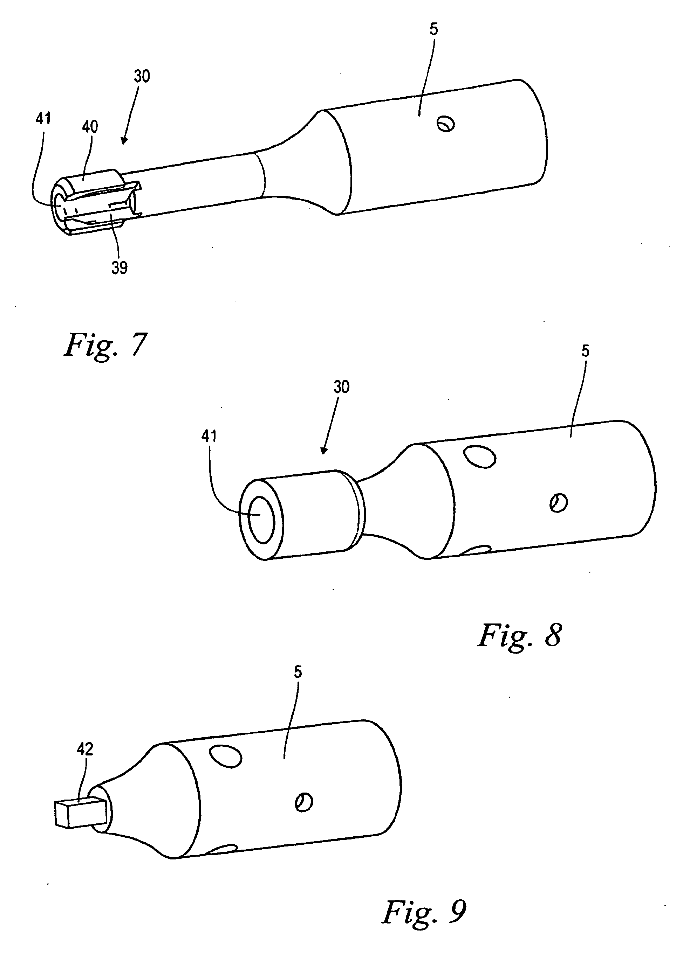

Der Grundkörper 31 des Bohrdübels 17 ist aus einem weichmagnetischen Eisenwerkstoff hergestellt und kann damit bedarfsweise mit oder ohne den Hilfszapfen 32 (Fig. 5) in Folge magnetischer Haltekräfte an einer im Zusammenhang mit Fig. 8 näher beschriebenen Magnethalterung 30 eingespannt werden.

Fig. 7 zeigt in einer vergrößerten Darstellung Einzelheiten der Spannvorrichtung 5 nach Fig. 5 mit der dübelseitigen Spannzange 29. Die Spannzange 29 umfaßt eine Anzahl von Spannlaschen 39, die von einem innenseitig konisch ausgeführten Spannring 40 umgriffen sind. Die Spannlaschen 39 und der Spannring 40 umschließen eine Öffnung 41, in die der Bohrdübel 17 beispielsweise mit der Gewindestange 18 nach Fig. 1 oder dem Hilfszapfen 32 nach Fig. 5 spielfrei eingeführt werden kann. Eine Verschraubung oder eine bajonettartige Verdrehung des Spannringes 40 bewirkt über dessen innenseitige Kegelfläche ein Zusammenpressen der Spannlaschen 39 radial nach innen, in dessen Folge der Bohrdübel 17 fest eingespannt wird. Ein werkzeugloses Lösen kann durch Drehung des Spannringes 40 in umgekehrter Richtung erfolgen.

Beim Ausführungsbeispiel der Spannvorrichtung 5 nach Fig. 8 ist am dübelseitigen Ende eine Magnethalterung 30 vorgesehen, die becherförmig ausgeführt ist und die Öffnung 41 umschließt. In die Öffnung 41 kann der Grundkörper 31 nach Fig. 6 oder der Hilfszapfen 32 des Bohrdübels 17 nach Fig. 5 spielfrei eingesteckt werden. Die Magnethalterung 30 ist als Permanentmagnet ausgeführt und hält dabei über die entstehenden Magnetkräfte zwischen dem Permanentmagneten und dem aus einem weichmagnetischen Eisenwerkstoff gebildeten Bohrdübel 17 den Bohrdübel 17, wobei ein Einführen oder ein Lösen des Bohrdübels 17 werkzeuglos von Hand unter Überwindung der Magnetkräfte erfolgen kann.

Fig. 9 zeigt eine weitere Variante der Spannvorrichtung 5, deren Grundkörper entsprechend der Ausführung nach Fig. 8 ausgebildet ist. An ihrem stirnseitigen Ende ist ein Hilfszapfen 42 vorgesehen, der im gezeigten Ausführungsbeispiel einen quadratischen Querschnitt aufweist. Auf den Hilfszapfen 42 kann ein mit einer entsprechenden Aufnahmeöffnung versehener Bohrdübel 17 beispielsweise mit einem Grundkörper 31 nach Fig. 6 aufgeschoben werden. Bei einer entsprechenden eckigen Ausgestaltung der Aufnahmeöffnung in Verbindung mit dem ebenfalls eckigen Querschnitt des Hilfszapfens 42 ergibt sich eine drehfeste Verbindung des Bohrdübels 17 mit der Spannvorrichtung 5. In Längsrichtung kann die Verbindung frei abziehbar oder mit einer definierten Klemmkraft ausgestaltet sein. Anstelle der gezeigten quadratischen Ausführung des Hilfszapfens 42 kann auch eine andere, von der kreisrunden Form abweichende Querschnittsgestaltung zweckmäßig sein, die zur Übertragung eines Drehmomentes geeignet ist. Bedarfsweise kann aber auch ein kreisrunder Querschnitt vorgesehen sein, wodurch eine drehmomentfreie Kraftübertragung zwischen der Spannvorrichtung 5 und dem Bohrdübel 17 (Fig. 6) gegeben ist.

## Patentansprüche

1. Dübel zum Einsetzen in ein Bohrloch (14), wobei der Dübel als Bohrdübel (17) zum Bohren des Bohrloches (14) mittels eines handgeführte, einen hochfrequenten Schwingungserreger (3) aufweisenden Elektrowerkzeuges (1) ausgebildet ist, **dadurch gekennzeichnet, dass** der Bohrdübel (17) einen außenseitig an seinem Grundkörper (31), insbesondere wendelförmig verlaufenden, Saug-/Spülkanal (7) aufweist.

2. Dübel nach Anspruch 1, **dadurch gekennzeichnet, dass** der Bohrdübel (17) eine Gewindestange (18) aufweist, die zur Halterung des Bohrdübels (17) in einer Spannvorrichtung (5) eines Elektrowerkzeuges (1) geeignet ist, und dass die Gewindestange (18) und ein Grundkörper des Bohrdübels (17) an ihren Berührflächen beschichtet sind.

3. Dübel nach Anspruch 1, **dadurch gekennzeichnet, dass** der Bohrdübel (17) einen Hilfszapfen (32) aufweist zur Halterung des Bohrdübels (17) in der Spannvorrichtung (5) eines Elektrowerkzeuges.

4. Dübel nach Anspruch 1, **dadurch gekennzeichnet, dass** der Bohrdübel (17) aus einem Magnetwerkstoff und insbesondere aus einem weichmagnetischen Eisenwerkstoff gebildet und zur magnetischen Halterung des Bohrdübels (17) in der Spannvorrichtung (5) des Elektrowerkzeuges (1) vorgesehen ist.

5. Dübel nach Anspruch 1, **dadurch gekennzeichnet, dass** der Grundkörper (31) des Bohrdübel (17) zumindest im wesentlichen zylindrisch ausgebildet ist.

6. Dübel nach Anspruch 1, **dadurch gekennzeichnet, dass** der Grundkörper (31) des Bohrdübels (17) einen Schaft (8) und ein als Bohrkopf (9) ausgebildetes freies Ende (25) aufweist, wobei der Bohrkopf (9) eine unrunde, in radialer Richtung über den Schaft (8) hinausragende Querschnittskontur (10) aufweist.

7. Dübel nach Anspruch 1, **dadurch gekennzeichnet, dass** der Grundkörper (31) des Bohrdübels (17) einen beim Bohren selbsttätig aufspreizenden Bohrkopf (9) aufweist.

8. Dübel nach Anspruch 7, **dadurch gekennzeichnet, dass** der Grundkörper (31) des Bohrdübels (17) im Bereich seines Bohrkopfes (9) Längsschlitze (33) aufweist und eine Stirnseite (34) des Bohrkopfes (9) konkav gewölbt ausgeführt ist.

## Claims

1. Fixing plug for insertion into a drill hole (14), the fixing plug being in the form of a drill plug (17) for drilling the drill hole (14) by means of a hand-operated electric tool (1) having a high-frequency oscillation exciter (3), **characterised in that** the drill plug (17) has a suction/flushing channel (7) running externally, especially helically, on its body (31).

2. Fixing plug according to claim 1, **characterised in that** the drill plug (17) has a threaded rod (18), which is suitable for retaining the drill plug (17) in a chuck (5) of an electric tool (1), and **in that** the threaded rod (18) and a body of the drill plug (17) are coated on their contact surfaces.

3. Fixing plug according to claim 1, **characterised in that** the drill plug (17) has an auxiliary pin (32), for retaining the drill plug (17) in the chuck (5) of an electric tool.

4. Fixing plug according to claim 1, **characterised in that** the drill plug (17) is formed from a magnetic material and especially from a soft ferromagnetic material, and is intended for magnetic retention of the drill plug (17) in the chuck (5) of the electric tool (1).

5. Fixing plug according to claim 1, **characterised in that** the body (31) of the drill plug (17) has at least a substantially cylindrical form.

6. Fixing plug according to claim 1, **characterised in that** the body (31) of the drill plug (17) comprises a shank (8) and a free end (25) in the form of a drill head (9), the drill head (9) having a non-circular cross-sectional contour (10) projecting in a radial direction beyond the shank (8).

7. Fixing plug according to claim 1, **characterised in that** the body (31) of the drill plug (17) comprises a drill head (9) that expands automatically during drilling.

8. Fixing plug according to claim 7, **characterised in that** the body (31) of the drill plug (17) has longitudinal slits (33) in the region of its drill head (9), and the front face (34) of the drill head (9) is of concavely curved construction.

## Revendications

1. Cheville destinée à être posée dans une forure (14), la cheville étant conçue sous la forme d'une cheville auto-foreuse (17) destinée à réaliser la forure (14) au moyen d'un outil électrique (1) portatif, muni d'un vibrateur (3) à haute fréquence, **caractérisée en ce que** la cheville auto-foreuse (17) comporte, sur le côté extérieur contre le corps de base (31), un conduit d'aspiration et de rinçage (7) qui s'étend en particulier en forme hélicoïdale.

2. Cheville selon la revendication 1, **caractérisée en ce que** la cheville auto-foreuse (17) comporte une tige filetée (18) qui est apte à maintenir la cheville auto-foreuse (17) dans un dispositif de serrage (5) d'un outil électrique (1), et **en ce que** la tige filetée (18) et un corps de base de la cheville auto-foreuse (17) sont munis d'un revêtement sur leurs faces de contact.

3. Cheville selon la revendication 1, **caractérisée en ce que** la cheville auto-foreuse (17) comporte une cheville auxiliaire (32) destinée à maintenir la cheville auto-foreuse (17) dans le dispositif de serrage (5) d'un outil électrique.

4. Cheville selon la revendication 1, **caractérisée en ce que** la cheville auto-foreuse (17) est réalisée dans un matériau magnétique et, en particulier, dans un matériau ferreux magnétique doux et est prévue pour la fixation magnétique de la cheville auto-foreuse (17) dans le dispositif de serrage (5) de l'outil électrique (1).

5. Cheville selon la revendication 1, **caractérisée en ce que** le corps de base (31) de la cheville auto-foreuse (17) est au moins sensiblement cylindrique.

6. Cheville selon la revendication 1, **caractérisée en ce que** le corps de base (31) de la cheville auto-foreuse (17) comporte une tige (8) et une extrémité libre (25), réalisée sous forme de tête de perçage (9), ladite tête de perçage (9) ayant une section avec un contour (10) non rond, en saillie dans la direction radiale au-delà de la tige (8).

7. Cheville selon la revendication 1, **caractérisée en ce que** le corps de base (31) de la cheville auto-foreuse (17) comporte une tête de perçage (9) qui s'écarte automatiquement pendant le perçage.

8. Cheville selon la revendication 7, **caractérisée en ce que** le corps de base (31) de la cheville auto-foreuse (17) comporte des fentes longitudinales (33) dans la zone de sa tête de perçage (9), et une face frontale (34) de la tête de perçage (9) est réalisée avec une courbure concave.
